# EUROPEAN PATENT SPECIFICATION

(11) **EP 4 335 136 B1**
(45) Date of publication and mention of the grant of the patent: **15.04.2026**
(21) Application number: 22728769.5
(22) Date of filing: 09.05.2022
(51) Int. Cl.: H04W 12/06

(54) **DATA RETRIEVAL OF A USER EQUIPMENT IN A FIFTH-GENERATION CORE NETWORK**
DATENABRUF EINES BENUTZERGERÄTS IN EINEM KERNNETZWERK DER FÜNFTEN GENERATION
RÉCUPÉRATION DE DONNÉES D'UN ÉQUIPEMENT UTILISATEUR DANS UN RÉSEAU CENTRAL DE CINQUIÈME GÉNÉRATION

(30) Priority: 07.05.2021 WO PCT/CN2021/092035
(43) Date of publication of application: 13.03.2024
(73) Proprietor: Telefonaktiebolaget LM Ericsson (publ), 164 83 Stockholm (SE)
(72) Inventor: HE, Yingjiao, Shanghai 200335 (CN); DE GREGORIO RODRIGUEZ, Jesus Angel, 28660 Boadilla del Monte, Madrid (ES); ZHANG, Wen, Shanghai 200335 (CN); ZHU, Jinyin, Shanghai 200335 (CN)
(74) Representative: Ericsson
(86) International application number: PCT/EP2022/062512
(87) International publication number: WO 2022/234144

(56) References cited:
- US-A1- 2012 084 449
- "5G; 5G System; Unified Data Management Services; Stage 3 (3GPP TS 29.503 version 16.5.0 Release 16)", vol. 3GPP CT, no. V16.5.0, 4 November 2020 (2020-11-04), pages 1 - 366, XP014389646, Retrieved from the Internet <URL:http://www.etsi.org/deliver/etsi_ts/129500_129599/129503/16.05.00_60/ts_129503v160500p.pdf> [retrieved on 20201104]

## Description

### TECHNICAL FIELD

Embodiments presented herein relate to methods, Network Function nodes, computer programs, and a computer program product for data retrieval of a User Equipment in a fifth-generation core network.

### BACKGROUND

In general terms, a fifth-generation (5G) system (5GS) is a telecommunication system using the 5G New Radio (NR) air interface, or the Evolved Universal Terrestrial Radio Access (E-UTRA) air interface connected to a 5G core network (5GC). The 5GC comprises functional entities called Network Functions (NFs). System functionality is achieved by a set of NFs providing services to other authorized NFs to access their services. Each NF offers different functionalities and thereby provides different services.

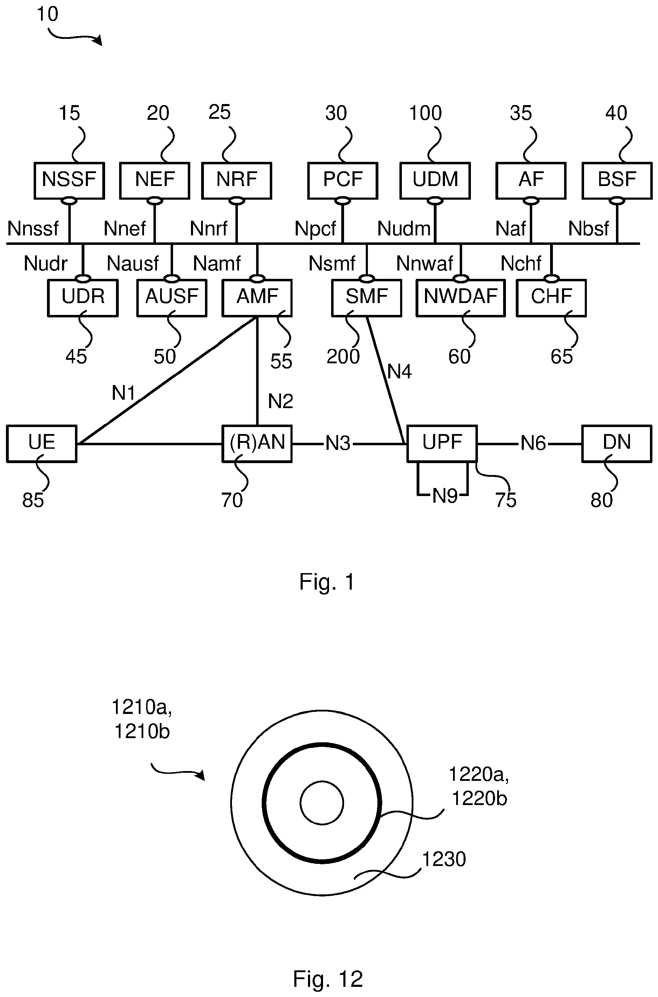

**Fig. 1** is a schematic diagram illustrating a communication network 10. The communication network 10 might be regarded as a public land mobile network (PLMN) and represents a reference architecture of a 5GS and comprises the following entities: an Authentication Server Function (AUSF) node 50, an Access and Mobility Management Function (AMF) node 55, a Data Network (DN) 80, e.g. operator services, Internet access or third party services, a Network Exposure Function (NEF) node 20, a Network Repository Function (NRF) node 25, a Network Slice Selection Function (NSSF) node 15, a Policy Control Function (PCF) node 30, a Session Management Function (SMF) node 200, a Unified Data Manager (UDM) node 100, a Unified Data Repository (UDR) node 45, a User Plane Function (UPF) node 75, an Application Function (AF) node 35, a User Equipment (UE), also denoted client node, 85, a (Radio) Access Network ((R)AN) 70, a Network Data Analytics Function (NWDAF) node 60, a Binding Support Function (BSF) node 40, and a Charging Function (CHF) node 65. Service based interfaces are represented by the format Nxyz (e.g., Nnssf, Nnef, etc.) and point to point interfaces are represented by the format Nx (e.g. N1, N2, etc.).

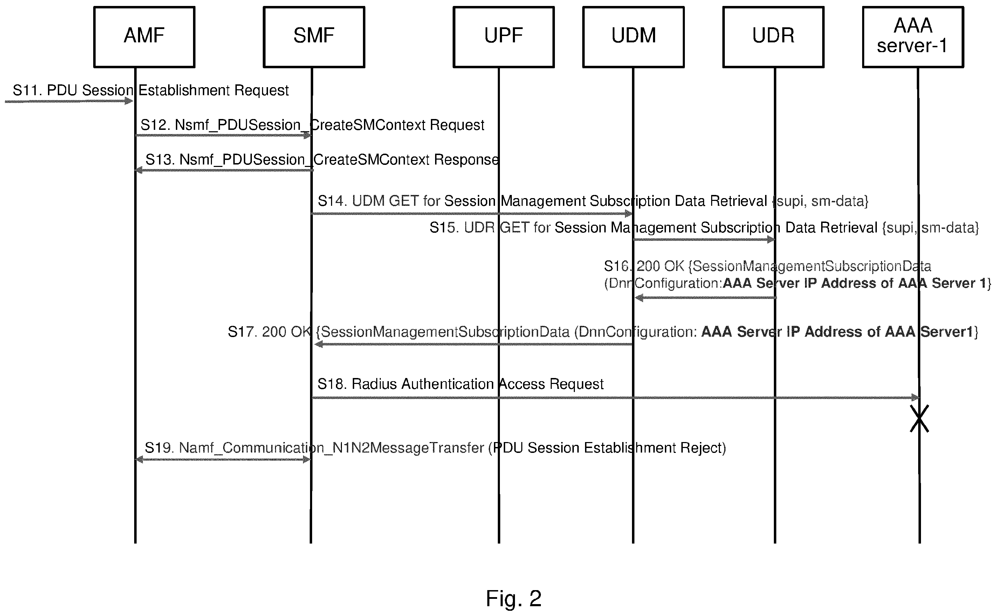

Two non-limiting and illustrative examples where an NF (such as an SMF node) interacts with the UDM for retrieval of information for the UE will now be disclosed. A first example is provided in the sequence diagram of **Fig. 2**. According to this example, the NF (e.g. an SMF) requests the UDM for Session Management Subscription Data Retrieval. The NF sends a UDM GET request (SUPI, selected Network Slice, and/or DNN) to the UDM. The UDM will return session management subscription data of the UE (an array of SessionManagementSubscriptionData objects, one array element per S-NSSAI). The SessionManagementSubscriptionData includes SessionManagementSubscriptionData \DnnConfiguration\dnAaaAddress. One definition of the DnnConfiguration is given in Table 6.1.6.2.9-1 of 3GPP TS 29.503, entitled "5G System; Unified Data Management Services; Stage 3", version 16.5.0, XP014389646.
S11: The AMF receives a PDU Session Establishment Request from a UE or (R)AN.
S12: The AMF sends an Nsmf_PDUSession_CreateSMContext Request to the SMF.
S13: The SMF sends an Nsmf_PDUSession_CreateSMContext Response to the AMF.
S14: The SMF sends a GET request for Session Management Subscription Data Retrieval (SUPI, sm-data) to the UDM.
S15: The UDM sends a GET request for Session Management Subscription Data Retrieval (SUPI, sm-data) to the UDR.
S16: The UDR sends a 100 OK message with Session Management Subscription Data (DnnConfiguration: AAA Server IP Address of AAA Server-1) to the UDM.
S17: The UDM sends a 100 OK message with Session Management Subscription Data (DnnConfiguration: AAA Server IP Address of AAA Server-1) to the SMF.
S18: The SMF uses the received AAA Server IP address and sends a Radius Authentication Request to AAA Server-1. It is assumed that either the IP address is incorrect, or AAA Server-1 experiences operational failure, and that AAA Server-1 therefore does not send any response.
S19: The SMF rejects the PDU Session Establishment by sending an Namf_Communication_N1N2MessageTransfer with (PDU Session Establishment Reject).

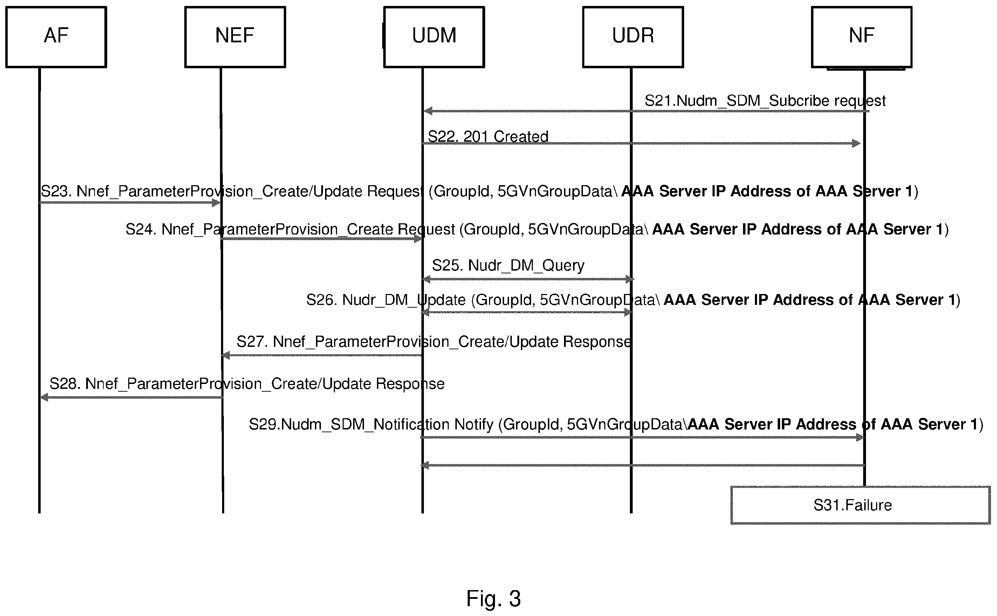

A second example is provided in the sequence diagram of **Fig. 3**. According to this example, the NF (e.g. an NEF) requests the UDM to provide information which can be used for the UE in the 5GS. The CREATE/UPDATE Request towards UDM includes 5GVnGroupConfiguration\5gVnGroupData\ dnAaaAddress. One definition of the 5GVnGroupData is given in Table 6.5.6.2.7-1 of aforementioned 3GPP TS 29.503.
S21: The NF (e.g. an SMF) send a Nudm_SDM_Subscribe request to the UDM.
S22: The UDM sends a 201 Created message.
S23: The AF sends an Nnef_ParameterProvision_Create/Update Request with GroupId, 5GVnGroup\AAA Server IP Address of AAA Server-1 to the NEF.
S24: The NEF sends an Nnef_ParameterProvision_Create/Update Request with GroupId, 5GVnGroup\AAA Server IP Address of AAA Server-1 to the UDM.
S25: The UDM performs an Nudr_DM_Query procedure with the UDR for the validation.
S26: The UDM performs an Nudr_DM_Update procedure with GroupId, 5GVnGroup\AAA Server IP Address of AAA Server-1 with the UDR.
S27: The UDM sends an Nnef_ParameterProvision_Create/Update Response to the NEF.
S28: The NEF sends an Nnef_ParameterProvision_Create/Update Response to the AF.
S29: The UDM sends an Nudm_SDM_Notification Notify with GroupId, 5GVnGroup\AAA Server IP Address of AAA Server-1 to the SMF since the SMF subscribes to the change in step S21.
S30: The SMF sends a 204 message to the UDM.
S31: The SMF uses the received IP address to contact and sends a Radius Authentication Request to AAA Server-1. It is assumed that either the IP address is incorrect, or AAA Server-1 experiences operational failure, and that AAA Server-1 therefore does not send any response.

As can be seen in the illustrative examples of both Fig. 2 and Fig. 3, there could be some scenarios where the information provided from the UDM to the SMF (or more generally, from a first NF to a second NF) does not enable secondary authentication and authorization of the UE to be performed.

Hence, there is a need for an improved procedure for a second NF to retrieve information of a UE from a first NF.

### SUMMARY

An object of embodiments herein is to enable one NF (such as an SMF) to retrieve information of a UE from another NF (such as an UDM) without resulting in the above scenarios where the AAA server is not available, or at least where the negative effects are mitigated or reduced.

According claim 1 there is presented a method for data retrieval of a UE in a 5GC. The method is performed by a first NF node. The method comprises obtaining (S106) a request for data of the UE (85) from a second NF node (200); retrieving (S108) the data of the UE (85) including an AAA server FQDN; and providing (S110) the data of the UE (85) including the AAA server FQDN towards the second NF node (200).

In some embodiments, the AAA server FQDN is retrieved from a UDR node (45)

In some embodiments, the method further comprises obtaining (S102) a first update request from a NEF node (20), wherein the update request comprises the AAA server FQDN; and providing (S104) a second update request to the UDR node (45) with the AAA server FQDN.

In some embodiments, the method is performed as part of a PDU session establishment procedure for the UE (85).

In some embodiments, the request for data is a request for Session Management Subscription Data Retrieval for the UE (85).

In some embodiments, the data of the UE (85) is provided either in a DnnConfiguration object or in a 5gVnGroupData object.

In some embodiments, the first NF node (200) is a UDM node and wherein the second NF node (200) is an SMF node.

According to claim 19 there is presented a first NF node for data retrieval of a UE in a 5GC. The first NF node comprises processing circuitry. The processing circuitry is configured to cause the first NF node to obtain a request for data of the UE from the second NF node. The processing circuitry is configured to cause the first NF node to retrieve the data of the UE including an AAA server FQDN. The processing circuitry is configured to cause the first NF node to provide the data of the UE including the AAA server FQDN towards the second NF node.

According to claim 7 there is presented a method for data retrieval of a UE in a 5GC. The method is performed by a second NF node. The method comprises providing (S202) a request for data of the UE (85) towards a first NF node (100); and obtaining (S204) the data of the UE (85) including an AAA server FQDN from the first NF node (100).

In some embodiments, the method further comprises authenticating the data of the UE with an AAA server, wherein the AAA server is determined based on the AAA server FQDN.

In some embodiments, determining the AAA server comprises retrieving (S206) a set of AAA server IP addresses from a DNS server by providing the AAA server FQDN to the DNS server.

In some embodiments, the method further comprises storing (S208) a mapping between the AAA server FQDN and each IP address in the set of AAA server IP addresses.

In some embodiments, the method further comprises providing (S210) an authentication request for the UE (85) to the AAA server at one of the IP address in the set of AAA server IP addresses.

In some embodiments, the authentication request is for secondary authentication and authorization for the UE (85).

In some embodiments, if the AAA server cannot be reached at said one of the IP address in the set of AAA server IP addresses, the request is provided to another one of the IP address in the set of AAA server IP addresses.

In some embodiments, providing the request for data is triggered by a previous failed attempt to contact the AAA server.

In some embodiments, the method is performed as part of a PDU session establishment procedure for the UE (85).

In some embodiments, the request for data is a request for Session Management Subscription Data Retrieval for the UE (85).

In some embodiments, the data of the UE (85) is obtained either in a DnnConfiguration object or in a 5gVnGroupData object.

In some embodiments, the first NF node (200) is a UDM node and wherein the second NF node (200) is an SMF node.

According to claim 21 there is presented a second NF node for data retrieval of a UE in a 5GC. The second NF node comprises processing circuitry. The processing circuitry is configured to cause the second NF node to provide a request for data of the UE towards the first NF node. The processing circuitry is configured to cause the second NF node to obtain the data of the UE including an AAA server FQDN from the first NF node. In some embodiments, the processing circuitry is configured to cause the second NF node to retrieve a set of AAA server IP addresses from a DNS server by providing the AAA server FQDN to the DNS server.

Advantageously, these claims can be used in procedures for the second NF (such as an SMF) to retrieve information of a UE from a first NF (such as a UDM) without resulting in the above scenarios where the AAA server is not available, or at least where the negative effects are mitigated or reduced.

Advantageously, these claims provide node redundancy. If one AAA server fails (or the corresponding IP address is not available), then the request for an operation to be performed by this AAA server can, according to the FQDN, be directed to another AAA server that does not experience failure.

Advantageously, these claims provide load balancing among the AAA servers. If one AAA server is overloaded, then the request for an operation to be performed by this AAA server can, according to the FQDN, be directed to another AAA server which is not overloaded.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication network according to embodiments;
Figs. 2 and 3 are sequence diagrams of methods according to examples;
Figs. 4 and 5 are flowcharts of methods according to embodiments;
Figs. 6A, 6B and 7 are sequence diagrams of methods according to embodiments;
Fig. 8 is a schematic diagram showing functional units of a first NF node according to an embodiment;
Fig. 9 is a schematic diagram showing functional modules of a first NF node according to an embodiment;
Fig. 10 is a schematic diagram showing functional units of a second NF node according to an embodiment;
Fig. 11 is a schematic diagram showing functional modules of a second NF node according to an embodiment;
Fig. 12 shows one example of a computer program product comprising computer readable means according to an embodiment;
Fig. 13 is a schematic diagram illustrating a telecommunication network connected via an intermediate network to a host computer in accordance with some embodiments; and
Fig. 14 is a schematic diagram illustrating host computer communicating via a radio base station with a terminal device over a partially wireless connection in accordance with some embodiments.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

As noted above, there is a need for an improved procedure for one NF to retrieve information for a UE from another NF. In this respect, the dnAaaAddress is defined as one single IP address. In the example of Fig. 2, this is illustrated by the fact that the dnAaaAddress in DnnConfiguration is defined as one single IP address. In the example of Fig. 3 this is illustrated by the fact that the dnAaaAddress in 5GvnGroupData is defined as one single IP address. Therefore, if the AAA server cannot be reached, or the AAA server cannot operate properly due to some failure, the secondary authentication and authorization for the UE will fail. In actual network deployments, there might be multiple configured AAA servers to provide load balance and redundancy. Therefore, if the dnAaaAddress is complemented by, or combined with, FQDN information, then DNS resolving can be performed in order to get multiple AAA server IP addresses (i.e., IP addresses for multiple AAA servers), thereby supporting load balance and providing AAA server redundancy.

The embodiments disclosed herein thus relate to mechanisms for data retrieval of a UE 85 in a 5GC. In order to obtain such mechanisms there is provided a first NF node 100, a method performed by the first NF node 100, a computer program product comprising code, for example in the form of a computer program, that when run on processing circuitry of the first NF node 100, causes the first NF node 100 to perform the method. In order to obtain such mechanisms there is further provided a second NF node 200, a method performed by the second NF node 200, and a computer program product comprising code, for example in the form of a computer program, that when run on processing circuitry of the second NF node 200, causes the second NF node 200 to perform the method.

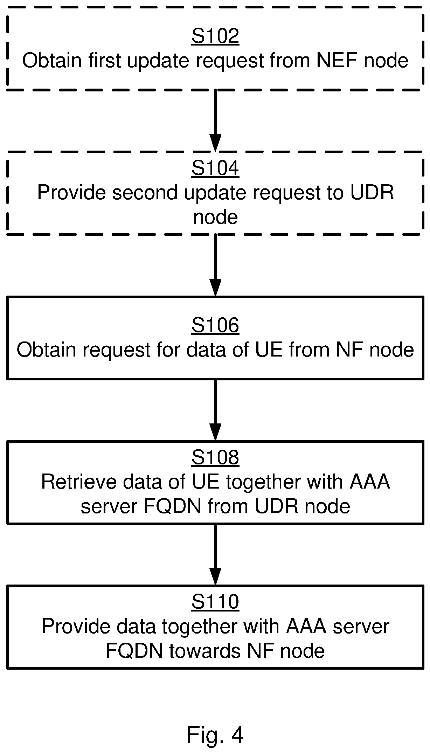

Reference is now made to **Fig. 4** illustrating a method for data retrieval of a UE 85 in a 5GC as performed by the first NF node 100 according to an embodiment.

As will be further disclosed below, the second NF node 200 provides a request for data of the UE 85 towards the first NF node 100. It is assumed that this request is received by the UDM 100. In particular, the first NF node 100 is configured to perform step S106:
S106: The first NF node 100 obtains a request for data of the UE 85 from the second NF node 200.

The data is retrieved from the UDR 45. In particular, the first NF node 100 is configured to perform step S108:
S108: The first NF node 100 retrieves the data of the UE 85 including an AAA server FQDN from the UDR node 45.

The data is then provided towards the NF having requested the data. In particular, the first NF node 100 is configured to perform step S110:
S110: The first NF node 100 provides the data of the UE 85 including the AAA server FQDN towards the second NF node 200.

Embodiments relating to further details of data retrieval of a UE 85 in a 5GC as performed by the first NF node 100 will now be disclosed.

There could be different types of first NF nodes 100 and second NF nodes 200. In some embodiments, the first NF node 100 is a UDM node and the second NF node 200 is an SMF node.

There may be different ways for the UDR node 45 to have access to the AAA server FQDN. In some aspects, the AAA server FQDN is provided to the UDR node 45 from the first NF node 100. In particular, in some embodiments, the first NF node 100 is configured to perform (optional) steps S102 and S104:
S102: The first NF node 100 obtains a first update request from a NEF node 20. The update request comprises the AAA server FQDN.
S104: The first NF node 100 provides a second update request to the UDR node 45 with the AAA server FQDN.

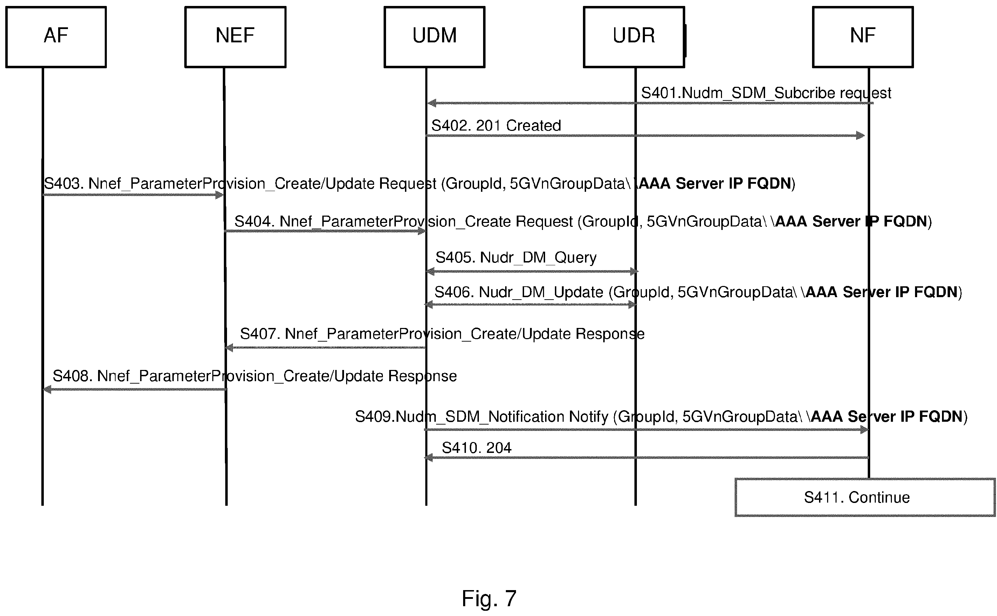

This will be illustrated in more detail below with reference to Fig. 7.

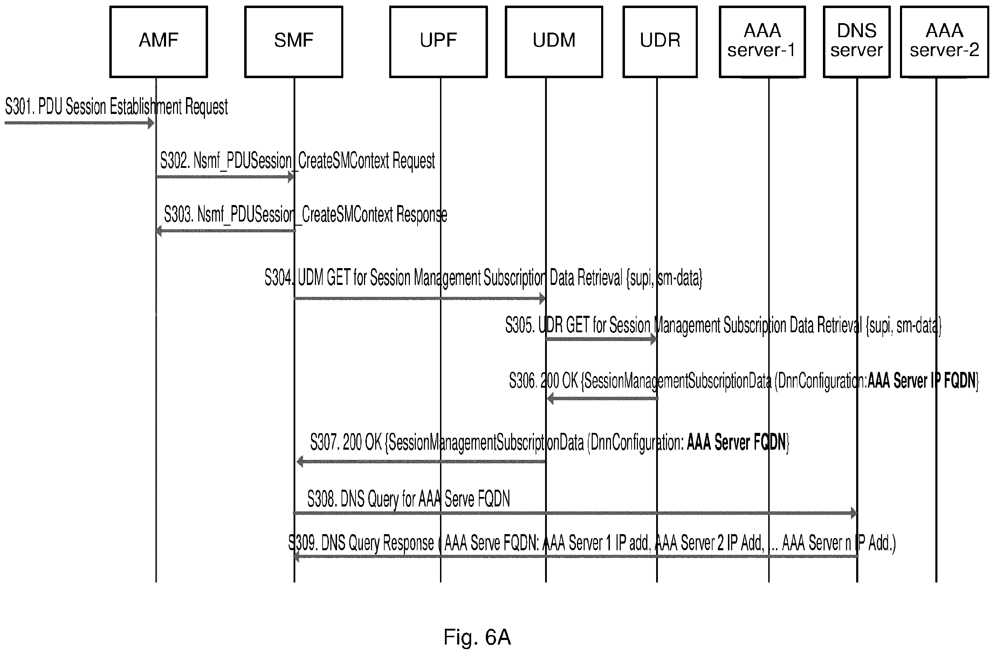

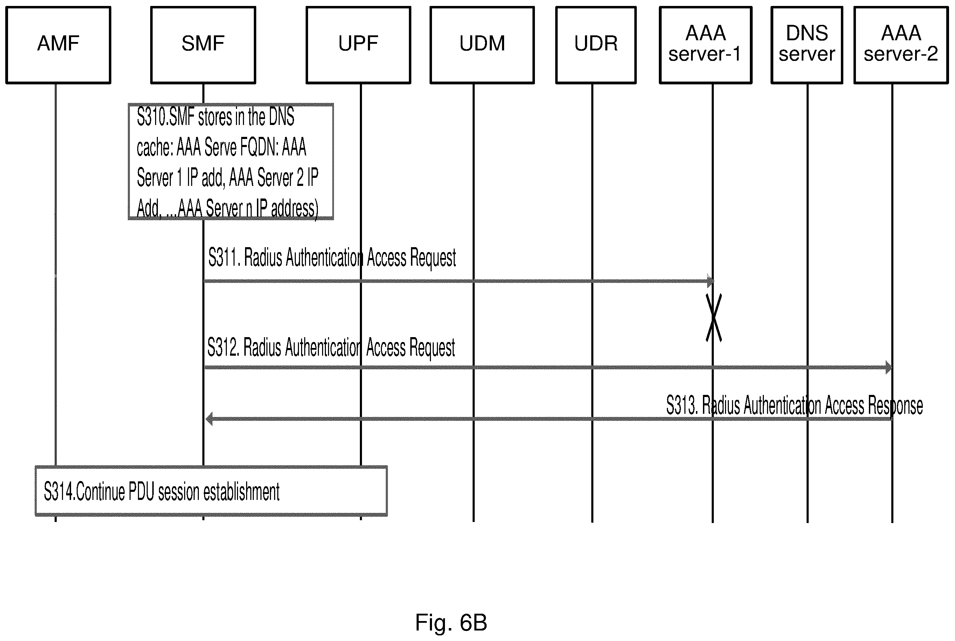

There could be different contexts in which the herein disclosed method is performed. In some embodiments, the method is performed as part of a PDU session establishment procedure for the UE 85. This will be illustrated in more detail below with reference to Fig. 6A and Fig. 6B.

There could be different types of requests for data obtained by the first NF node 100 from the second NF node 200 in step S106. In some embodiments, the request for data is a request for Session Management Subscription Data Retrieval for the UE 85. This will be illustrated in more detail below with reference to Fig. 6A and Fig. 6B. In other embodiments, the request for data is a request for information usable for the UE 85 in a 5GS 10. This will be illustrated in more detail below with reference to Fig. 7.

There could be different ways for the first NF node 100 to provide the data of the UE 85 including the AAA server FQDN towards the second NF node 200 in step S110. In some embodiments, the data of the UE 85 is provided either in a DnnConfiguration object or in a 5gVnGroupData object. The former will be illustrated in more detail below with reference to Fig. 6A and Fig. 6B whereas the latter will be illustrated in more detail below with reference to Fig. 7.

There could be different ways for the first NF node 100 to provide the AAA server FQDN towards the second NF node 200 in step S110. In some embodiments, the AAA server FQDN is provided in a dnAaaAddress attribute of either the DnnConfiguration object or the 5gVnGroupData object. The former will be illustrated in more detail below with reference to Fig. 6A and Fig. 6B whereas the latter will be illustrated in more detail below with reference to Fig. 7.

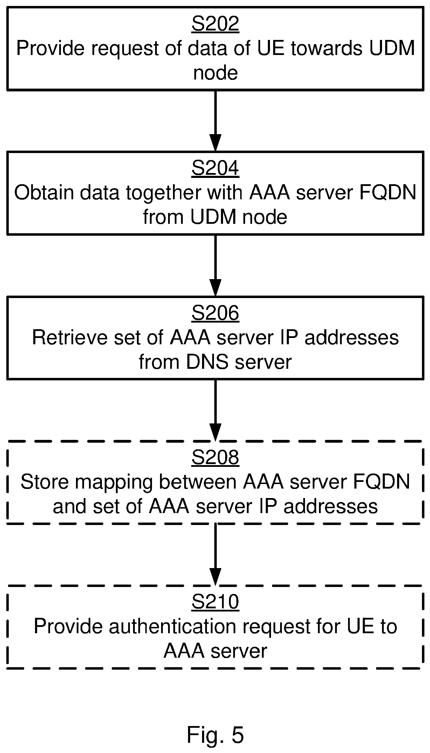

Reference is now made to **Fig. 5** illustrating a method for data retrieval of a UE 85 in a 5GC as performed by the second NF node 200 according to an embodiment.

It is assumed that the second NF node 200 requests data of the UE 85. In particular, the second NF node 200 is configured to perform step S202:
S202: The second NF node 200 provides a request for data of the UE 85 towards the first NF node 100.

As disclosed above, the first NF node 100 provides the data of the UE 85 including the AAA server FQDN. It is assumed that the second NF node 200 received this data. In particular, the second NF node 200 is configured to perform step S204:
S204: The second NF node 200 obtains the data of the UE 85 including an AAA server FQDN from the first NF node 100.

AAA server IP addresses are then retrieved from the AAA server FQDN. In particular, the second NF node 200 is configured to perform step S206:
S206: The second NF node 200 retrieves a set of AAA server IP addresses from a DNS server by providing the AAA server FQDN to the DNS server.

Embodiments relating to further details of data retrieval of a UE 85 in a 5GC as performed by the second NF node 200 will now be disclosed.

As noted above, there could be different types of first NF nodes 100 and second NF nodes 200. In some embodiments, the first NF node 100 is a UDM node and the second NF node 200 is an SMF node.

There may be different actions performed by the second NF node 200 once having retrieved the set of AAA server IP addresses from the DNS server in step S206.

In some aspects, a mapping between the AAA server FQDN and the IP addresses is stored. In particular, in some embodiments, the second NF node 200 is configured to perform (optional) step S208:
S208: The second NF node 200 stores a mapping between the AAA server FQDN and each IP address in the set of AAA server IP addresses.

In some aspects, the second NF node 200 provides an authentication request to an AAA server at at least one of the IP addresses. In particular, in some embodiments, the second NF node 200 is configured to perform (optional) step S210:
S210: The second NF node 200 provides an authentication request for the UE 85 to the AAA server at one of the IP address in the set of AAA server IP addresses.

In some embodiments, the authentication request is for secondary authentication and authorization for the UE 85.

The second NF node 200 might repeat step S210 with different IP addresses in the set of AAA server IP addresses until an AAA server responds to the authentication request. In particular, in some embodiments, if the AAA server cannot be reached at one of the IP address in the set of AAA server IP addresses, the request is provided to another one of the IP address in the set of AAA server IP addresses.

There could be different triggers for the second NF node 200 to provide the request for data of the UE 85 towards the first NF node 100 in step S202. In some embodiments, providing the request for data is triggered by a previous failed attempt to contact the AAA server. That is, if the second NF node 200 previously has provided an authentication request for the UE 85 to the AAA server at one particular IP address and the AAA server could not be reached at this particular IP address, this could act as a trigger for the second NF node 200 to provide the request for data of the UE 85 towards the first NF node 100 in step S202.

As disclosed above, there could be different contexts in which the herein disclosed method is performed. In some embodiments, the method is performed as part of a PDU session establishment procedure for the UE 85. This will be illustrated in more detail below with reference to Fig. 6A and Fig. 6B.

There could be different types of requests for data provided by the second NF node 200 towards the second NF node 200 in step S202. In some embodiments, the request for data is a request for Session Management Subscription Data Retrieval for the UE 85. This will be illustrated in more detail below with reference to Fig. 6A and Fig. 6B. In other embodiments, the request for data is a request for information usable for the UE 85 in a 5GS 10. This will be illustrated in more detail below with reference to Fig. 7.

There could be different ways for the second NF node 200 to obtain the data of the UE 85 including the AAA server FQDN from the first NF node 100 in step S204. In some embodiments, the data of the UE 85 is obtained either in a DnnConfiguration object or in a 5gVnGroupData object. The former will be illustrated in more detail below with reference to Fig. 6A and Fig. 6B whereas the latter will be illustrated in more detail below with reference to Fig. 7. Further, in some embodiments, the AAA server FQDN is obtained in a dnAaaAddress attribute of either the DnnConfiguration object or the 5gVnGroupData object. The former will be illustrated in more detail below with reference to Fig. 6A and Fig. 6B whereas the latter will be illustrated in more detail below with reference to Fig. 7.

With reference again to 3GPP TS 29.503, Table 6.1.6.2.9-1 and/or Table 6.5.6.2.7-1 of 3GPP TS 29.503 of 3GPP TS 29.503 could be updated to contain entries according to Table 1 or Table 2. In this respect, Table 1 provided an example where the data type of the dnAaaAddress attribute is extended to also include the FQDN whereas Table 2 provides an example where a new attribute dnAaaFQDN is added with data type FQDN. This could be the case regardless if the data of the UE 85 is provided in a DnnConfiguration object or in a 5gVnGroupData object.

**Table 1: Extension of data type of dnAaaAddress attribute to include FQDN**

| **Attribute name** | **Data type** | **P** | **Cardinality** | **Description** |
|---|---|---|---|---|
| dnAaaAddress | IpAddress/ FQDN | O | 0..1 | The address information of DN-AAA server, used for secondary authentication and authorization |

**Table 2: Addition of new attribute dnAaaFQDN with data type FQDN**

| **Attribute name** | **Data type** | **P** | **Cardinality** | **Description** |
|---|---|---|---|---|
| dnAaaFQDN, | FQDN | O | 0..1 | The FQDN information of DN-AAA server, used for secondary authentication and authorization |

In both these cases the FQDN could be represented by a simple data type with type name Fqdn, being a string, as illustrated in Table 3. Table 3 could be an extension to Table 6.1.6.3.2-1 in 3GPP TS 29.503.

**Table 3: FQDN represented as a simple data type**

| **Type Name** | **Type Definition** | **Description** |
|---|---|---|
| Fqdn | string | FQDN (Fully Qualified Domain Name) |

A first particular embodiment for data retrieval of a UE 85 in a 5GC based on at least some of the above disclosed embodiments will now be disclosed in detail with reference to the sequence diagram of **Fig. 6A** **and** **Fig. 6B****.** This embodiment is related to the scenario where the method is performed as part of a PDU session establishment procedure for the UE 85, where the first NF node 100 is a UDM and the second NF is an SMF, where the request for data is a request for Session Management Subscription Data Retrieval for the UE 85, where the data of the UE 85 is provided either in a DnnConfiguration object or in a 5gVnGroupData object, and where the AAA server FQDN is provided in a dnAaaAddress attribute of the DnnConfiguration object.
S301: The AMF receives a PDU Session Establishment Request from the UE or (R)AN.
S302: The AMF sends an Nsmf_PDUSession_CreateSMContext Request to the SMF.
S303: The SMF sends an Nsmf_PDUSession_ CreateSM Context Response to the AMF.
S304: The SMF sends a GET request for Session Management Subscription Data Retrieval (SUPI, sm-data) to the UDM.
S305: The UDM sends a GET request for Session Management Subscription Data Retrieval (SUPI, sm-data) to the UDR.
S306: The UDR sends a 100 OK message with Session Management Subscription Data (DnnConfiguration: AAA Server FQDN) to the UDM.
S307: The UDM sends a 100 OK message with Session Management Subscription Data (DnnConfiguration: AAA Server FQDN) to the SMF.
S308: The SMF sends a DNS Query Request with the AAA Server FQDN to the DNS Server.
S309: The DNS Server sends a DNS Query Response with an AAA Server FQDN mapping with AAA Server-1 IP Address, AAA Server-2 IP Address, .... AAA Server-N IP Address in return to the SMF.
S310. The SMF stores the mapping in the DNS cache: AAA Server FQDN mapping with AAA Server-1 IP Address, AAA Server-2 IP Address, .... AAA Server-N IP Address.
S311. The SMF selects AAA Server-1 IP address and sends a Radius Authentication Request to AAA Server-1.
S312. Either the IP address of is incorrect, or AAA Server-1 experiences operational failure, and AAA Server-1 therefore does not send any response. The SMF therefore re-sends the Radius Authentication Request (or sends a second Radius Authentication Request) to AAA Server-2.
S313. AAA Server-2 sends a Radius Authentication Response to the SMF.
S314. The SMF continues the PDU Session Establishment procedure.

If in S307 both an AAA Server IP address and an AAA Server FQDN are sent, the SMF can decide which has the higher priority to be used. If the AAA Server IP address is decided to be used firstly, the SMF can use the AAA server IP address first, and if failed, the SMF can then use the AAA Server FQDN.

A second particular embodiment for data retrieval of a UE 85 in a 5GC based on at least some of the above disclosed embodiments will now be disclosed in detail with reference to the sequence diagram of **Fig. 7**. This embodiment is related to the scenario where the request for data is a request for information usable for the UE 85 in a 5GS 10, where the first NF node 100 is a UDM and the second NF is an SMF, where the data of the UE 85 is provided in a 5gVnGroupData object, and where the AAA server FQDN is provided in a dnAaaAddress attribute of the 5gVnGroupData object.
S401: The NF (e.g., the SMF) sends a Nudm_SDM_Subscribe request to the UDM.
S402: The UDM sends a 201 Created message.
S403: The AF sends an Nnef_ParameterProvision_Create/Update Request with GroupId, 5GVnGroup\ AAA Server FQDN to the NEF.
S404: The NEF send an Nnef_ParameterProvision_Create/Update Request with GroupId, 5GVnGroup\ AAA Server FQDN to the UDM.
S405: The UDM performs a Nudr_DM_Query procedure with the UDR for the data validation.
S406: The UDM performs an Nudr_DM_ Update procedure with GroupId, 5GVnGroup\ AAA Server FQDN with the UDR.
S407: The UDM sends an Nnef_ParameterProvision_Create/Update Response to the NEF.
S408: The NEF sends an Nnef_ParameterProvision_Create/Update Response to the AF.
S409: The UDM sends an Nudm_SDM_Notification Notify with GroupId, 5GVnGroup\ AAA Server FQDN to the SMF since the SMF subscribes to the change in step S401.
S410: The SMF sends a 204 message to the UDM.
S411: The procedure of Fig. 7 can be continued from step S310 and onwards.

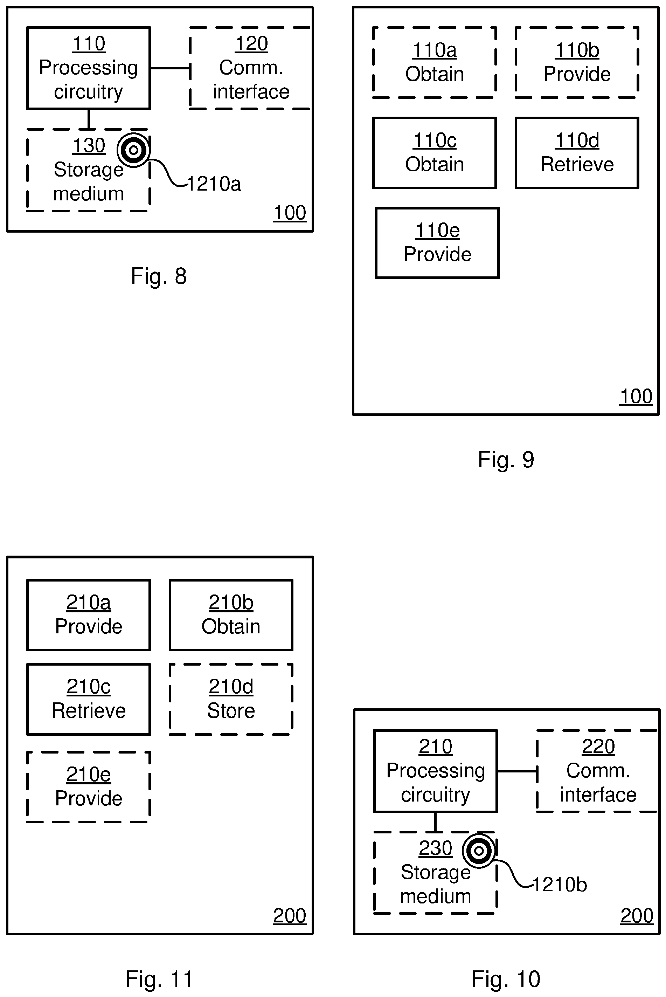

**Fig. 8** schematically illustrates, in terms of a number of functional units, the components of a first NF node 100 according to an embodiment. Processing circuitry 110 is provided using any combination of one or more of a suitable central processing unit (CPU), multiprocessor, microcontroller, digital signal processor (DSP), etc., capable of executing software instructions stored in a computer program product 1110a (as in Fig. 12), e.g. in the form of a storage medium 130. The processing circuitry 110 may further be provided as at least one application specific integrated circuit (ASIC), or field programmable gate array (FPGA).

Particularly, the processing circuitry 110 is configured to cause the first NF node 100 to perform a set of operations, or steps, as disclosed above. For example, the storage medium 130 may store the set of operations, and the processing circuitry 110 may be configured to retrieve the set of operations from the storage medium 130 to cause the first NF node 100 to perform the set of operations. The set of operations may be provided as a set of executable instructions. Thus the processing circuitry 110 is thereby arranged to execute methods as herein disclosed.

The storage medium 130 may also comprise persistent storage, which, for example, can be any single one or combination of magnetic memory, optical memory, solid state memory or even remotely mounted memory.

The first NF node 100 may further comprise a communications interface 120 for communications with other entities, functions, nodes, and devices, as illustrated in the communication network 10. As such the communications interface 120 may comprise one or more transmitters and receivers, comprising analogue and digital components.

The processing circuitry 110 controls the general operation of the first NF node 100 e.g. by sending data and control signals to the communications interface 120 and the storage medium 130, by receiving data and reports from the communications interface 120, and by retrieving data and instructions from the storage medium 130. Other components, as well as the related functionality, of the first NF node 100 are omitted in order not to obscure the concepts presented herein.

**Fig. 9** schematically illustrates, in terms of a number of functional modules, the components of a first NF node 100 according to an embodiment. The first NF node 100 of Fig. 9 comprises a number of functional modules; an obtain module 110c configured to perform step S106, a retrieve module 110d configured to perform step S108, and a provide module 110e configured to perform step S110. The first NF node 100 of Fig. 9 may further comprise a number of optional functional modules, such as any of an obtain module 110a configured to perform step S102 and a provide module 110b configured to perform step S104. In general terms, each functional module 110a:11oe may be implemented in hardware or in software. Preferably, one or more or all functional modules 110a:110e may be implemented by the processing circuitry 110, possibly in cooperation with the communications interface 120 and/or the storage medium 130. The processing circuitry 110 may thus be arranged to from the storage medium 130 fetch instructions as provided by a functional module 110a:110e and to execute these instructions, thereby performing any steps of the first NF node 100 as disclosed herein.

**Fig. 10** schematically illustrates, in terms of a number of functional units, the components of a second NF node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1110b (as in Fig. 12), e.g. in the form of a storage medium 230. The processing circuitry 210 may further be provided as at least one application specific integrated circuit (ASIC), or field programmable gate array (FPGA).

Particularly, the processing circuitry 210 is configured to cause the second NF node 200 to perform a set of operations, or steps, as disclosed above. For example, the storage medium 230 may store the set of operations, and the processing circuitry 210 may be configured to retrieve the set of operations from the storage medium 230 to cause the second NF node 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The second NF node 200 may further comprise a communications interface 220 for communications with other entities, functions, nodes, and devices, as illustrated in the communication network 10. As such the communications interface 220 may comprise one or more transmitters and receivers, comprising analogue and digital components.

The processing circuitry 210 controls the general operation of the second NF node 200 e.g. by sending data and control signals to the communications interface 220 and the storage medium 230, by receiving data and reports from the communications interface 220, and by retrieving data and instructions from the storage medium 230. Other components, as well as the related functionality, of the second NF node 200 are omitted in order not to obscure the concepts presented herein.

**Fig. 11** schematically illustrates, in terms of a number of functional modules, the components of a second NF node 200 according to an embodiment. The second NF node 200 of Fig. 11 comprises a number of functional modules; a provide module 210a configured to perform step S202, an obtain module 210b configured to perform step S204, and a retrieve module 210c configured to perform step S106. The second NF node 200 of Fig. 11 may further comprise a number of optional functional modules, such as any of a store module 210d configured to perform step S208 and a provide module 210e configured to perform step S210. In general terms, each functional module 210a:210e may be implemented in hardware or in software. Preferably, one or more or all functional modules 210a:210e may be implemented by the processing circuitry 210, possibly in cooperation with the communications interface 220 and/or the storage medium 230. The processing circuitry 210 may thus be arranged to from the storage medium 230 fetch instructions as provided by a functional module 210a:210e and to execute these instructions, thereby performing any steps of the second NF node 200 as disclosed herein.

The first NF node 100 and/or second NF node 200 may be provided as a standalone device or as a part of at least one further device. For example, the first NF node 100 and/or second NF node 200 may be provided in a node of the core network. Alternatively, functionality of the first NF node 100 and/or second NF node 200 may be distributed between at least two devices, or nodes. Thus, a first portion of the instructions performed by the first NF node 100 and/or second NF node 200 may be executed in a first device, and a second portion of the instructions performed by the first NF node 100 and/or second NF node 200 may be executed in a second device; the herein disclosed embodiments are not limited to any particular number of devices on which the instructions performed by the first NF node 100 and/or second NF node 200 may be executed. Hence, the methods according to the herein disclosed embodiments are suitable to be performed by a first NF node 100 and/or second NF node 200 residing in a cloud computational environment. Therefore, although a single processing circuitry 110, 210 is illustrated in Figs. 8 and 10 the processing circuitry 110, 210 may be distributed among a plurality of devices, or nodes. The same applies to the functional modules 110a:110e, 210a:210e of Figs. 9 and 11 and the computer programs 1120a, 1120b of Fig. 12.

**Fig. 12** shows one example of a computer program product 1110a, 1110b comprising computer readable means 1130. On this computer readable means 1130, a computer program 1120a can be stored, which computer program 1120a can cause the processing circuitry 110 and thereto operatively coupled entities and devices, such as the communications interface 120 and the storage medium 130, to execute methods according to embodiments described herein. The computer program 1120a and/or computer program product 1110a may thus provide means for performing any steps of the first NF node 100 as herein disclosed. On this computer readable means 1130, a computer program 1120b can be stored, which computer program 1120b can cause the processing circuitry 210 and thereto operatively coupled entities and devices, such as the communications interface 220 and the storage medium 230, to execute methods according to embodiments described herein. The computer program 1120b and/or computer program product 1110b may thus provide means for performing any steps of the second NF node 200 as herein disclosed.

In the example of Fig. 12, the computer program product 1110a, 1110b is illustrated as an optical disc, such as a CD (compact disc) or a DVD (digital versatile disc) or a Blu-Ray disc. The computer program product 1110a, 1110b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1120a, 1120b is here schematically shown as a track on the depicted optical disk, the computer program 1120a, 1120b can be stored in any way which is suitable for the computer program product 1110a, 1110b.

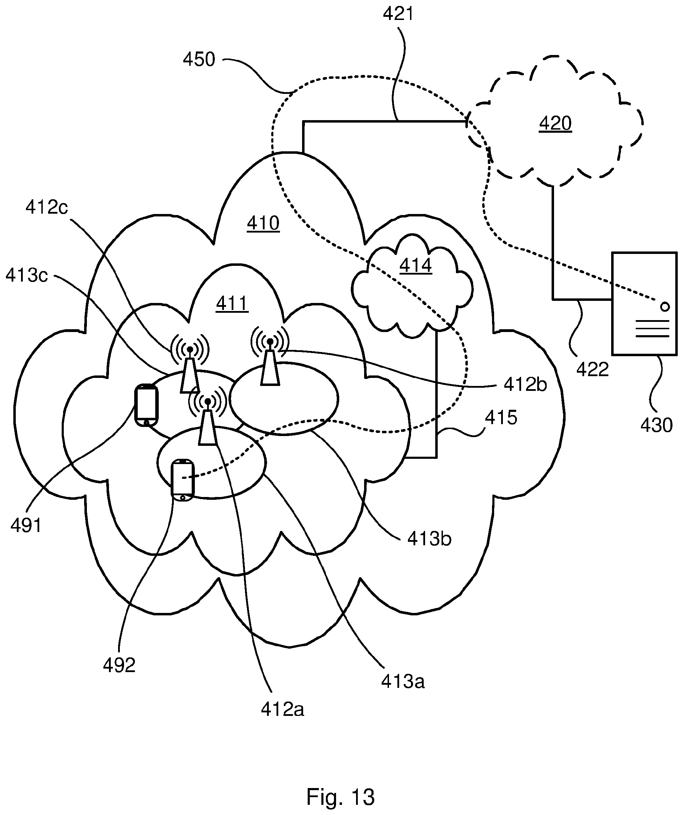

**Fig. 13** is a schematic diagram illustrating a telecommunication network connected via an intermediate network 420 to a host computer 430 in accordance with some embodiments. In accordance with an embodiment, a communication system includes telecommunication network 410, such as a 3GPP-type cellular network, which comprises access network 411, such as (R)AN 70 in Fig. 1, and core network 414, such as the 5GC in Fig. 1. Access network 411 comprises a plurality of radio access network nodes 412a, 412b, 412c, such as NBs, eNBs, gNBs (corresponding to the (R)AN 70 of Fig. 1) or other types of wireless access points, each defining a corresponding coverage area, or cell, 413a, 413b, 413c. Each radio access network nodes 412a, 412b, 412c is connectable to core network 414 over a wired or wireless connection 415. A first UE 491 located in coverage area 413c is configured to wirelessly connect to, or be paged by, the corresponding network node 412c. A second UE 492 in coverage area 413a is wirelessly connectable to the corresponding network node 412a. While a plurality of UE 491, 492 are illustrated in this example, the disclosed embodiments are equally applicable to a situation where a sole UE is in the coverage area or where a sole terminal device is connecting to the corresponding network node 412. The UEs 491, 492 correspond to the UE 85 of Fig. 1.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of Fig. 13 as a whole enables connectivity between the connected UEs 491, 492 and host computer 430. The connectivity may be described as an over-the-top (OTT) connection 450. Host computer 430 and the connected UEs 491, 492 are configured to communicate data and/or signalling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, network node 412 may not or need not be informed about the past routing of an incoming downlink communication with data originating from host computer 430 to be forwarded (e.g., handed over) to a connected UE 491. Similarly, network node 412 need not be aware of the future routing of an outgoing uplink communication originating from the UE 491 towards the host computer 430.

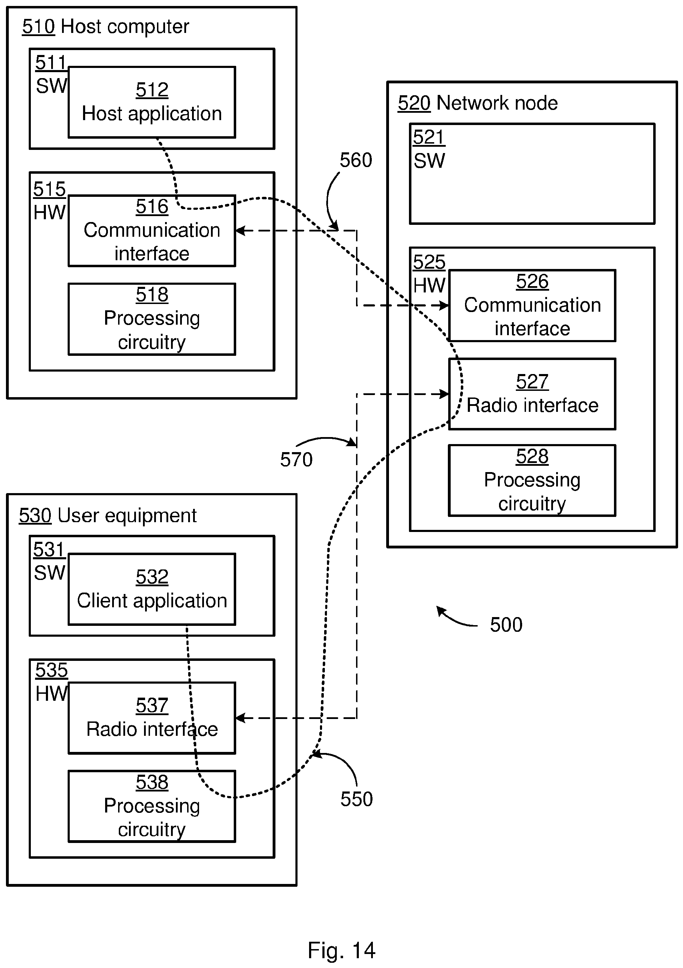

**Fig. 14** is a schematic diagram illustrating host computer communicating via a radio access network node with a UE over a partially wireless connection in accordance with some embodiments. Example implementations, in accordance with an embodiment, of the UE, radio access network node and host computer discussed in the preceding paragraphs will now be described with reference to Fig. 14. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. The UE 530 corresponds to the UE 85 of Fig. 1. In providing the service to the remote user, host application 512 may provide user data which is transmitted using OTT connection 550.

Communication system 500 further includes radio access network node 520 provided in a telecommunication system and comprising hardware 525 enabling it to communicate with host computer 510 and with UE 530. The radio access network node 520 corresponds to the (R)AN 70 of Fig. 1. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Fig. 14) served by radio access network node 520. Communication interface 526 may be configured to facilitate connection 560 to host computer 510. Connection 560 may be direct or it may pass through a core network (not shown in Fig. 14) of the telecommunication system and/or through one or more intermediate networks outside the telecommunication system. In the embodiment shown, hardware 525 of radio access network node 520 further includes processing circuitry 528, which may comprise one or more programmable processors, application-specific integrated circuits, field programmable gate arrays or combinations of these (not shown) adapted to execute instructions. Radio access network node 520 further has software 521 stored internally or accessible via an external connection.

Communication system 500 further includes UE 530 already referred to. Its hardware 535 may include radio interface 537 configured to set up and maintain wireless connection 570 with a radio access network node serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, radio access network node 520 and UE 530 illustrated in Fig. 14 may be similar or identical to host computer 430, one of network nodes 412a, 412b, 412c and one of UEs 491, 492 of Fig. 13, respectively. This is to say, the inner workings of these entities may be as shown in Fig. 14 and independently, the surrounding network topology may be that of Fig. 13.

In Fig. 14, OTT connection 550 has been drawn abstractly to illustrate the communication between host computer 510 and UE 530 via network node 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and radio access network node 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may reduce interference, due to improved classification ability of airborne UEs which can generate significant interference.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect network node 520, and it may be unknown or imperceptible to radio access network node 520. Such procedures and functionalities may be known and practiced in the art. In certain embodiments, measurements may involve proprietary UE signalling facilitating host computer's 510 measurements of throughput, propagation times, latency and the like. The measurements may be implemented in that software 511 and 531 causes messages to be transmitted, in particular empty or 'dummy' messages, using OTT connection 550 while it monitors propagation times, errors etc.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for data retrieval of a UE (85) in a 5GC, the method being performed by a first NF node (100), the method comprising:
obtaining (S106) a request for data of the UE (85) from a second NF node (200);
retrieving (S108) the data of the UE (85) including an AAA server FQDN; and
providing (S110) the data of the UE (85) including the AAA server FQDN towards the second NF node (200).

2. The method according to claim 1, wherein the AAA server FQDN is retrieved from a UDR node (45), and particularly wherein the method further comprises:
obtaining (S102) a first update request from a NEF node (20), wherein the update request comprises the AAA server FQDN; and
providing (S104) a second update request to the UDR node (45) with the AAA server FQDN.

3. The method according to any one of claims 1 to 2, wherein the method is performed as part of a PDU session establishment procedure for the UE (85).

4. The method according to any one of claims 1 to 3, wherein the request for data is a request for Session Management Subscription Data Retrieval for the UE (85).

5. The method according to any one of claims 1 to 4, wherein the data of the UE (85) is provided either in a DnnConfiguration object or in a 5gVnGroupData object.

6. The method according to any one of claims 1 to 5, wherein the first NF node (200) is a UDM node and wherein the second NF node (200) is an SMF node.

7. A method for data retrieval of a UE (85) in a 5GC, the method being performed by a second NF node (200), the method comprising:
providing (S202) a request for data of the UE (85) towards a first NF node (100); and
obtaining (S204) the data of the UE (85) including an AAA server FQDN from the first NF node (100).

8. The method according to claim 7, further comprising:
authenticating the data of the UE with an AAA server, wherein the AAA server is determined based on the AAA server FQDN.

9. The method according to claim 8, wherein determining the AAA server comprises retrieving (S206) a set of AAA server IP addresses from a DNS server by providing the AAA server FQDN to the DNS server.

10. The method according to any one of claims 7 to 9, wherein the method further comprises:
storing (S208) a mapping between the AAA server FQDN and each IP address in the set of AAA server IP addresses.

11. The method according to any one of claims 9-10, wherein the method further comprises:
providing (S210) an authentication request for the UE (85) to the AAA server at one of the IP address in the set of AAA server IP addresses.

12. The method according to any one of claims 7 to 11, wherein the authentication request is for secondary authentication and authorization for the UE (85).

13. The method according to claim 12, wherein, if the AAA server cannot be reached at said one of the IP address in the set of AAA server IP addresses, the request is provided to another one of the IP address in the set of AAA server IP addresses.

14. The method according to claim 12 or 13, wherein providing the request for data is triggered by a previous failed attempt to contact the AAA server.

15. The method according to any one of claims 7 to 14, wherein the method is performed as part of a PDU session establishment procedure for the UE (85).

16. The method according to any one of claims 7 to 15, wherein the request for data is a request for Session Management Subscription Data Retrieval for the UE (85).

17. The method according to any one of claims 7 to 16, wherein the data of the UE (85) is obtained either in a DnnConfiguration object or in a 5gVnGroupData object.

18. The method according to any one of claims 7 to 17, wherein the first NF node (200) is a UDM node and wherein the second NF node (200) is an SMF node.

19. A first NF node (100) for data retrieval of a UE (85) in a 5GC, the first NF node (100) comprising processing circuitry (110), the processing circuitry being configured to cause the first NF node (100) to:
obtain a request for data of the UE (85) from a second NF node (200);
retrieve the data of the UE (85) including an AAA server FQDN; and
provide the data of the UE (85) including the AAA server FQDN towards the second NF node (200).

20. The first NF node (100) according to claim 19, further being configured to perform the method according to any of claims 2 to 6.

21. A second NF node (200) for data retrieval of a UE (85) in a 5GC, the second NF node (200) comprising processing circuitry (210), the processing circuitry being configured to cause the second NF node (200) to:
provide a request for data of the UE (85) towards a first NF node (100); and
obtain the data of the UE (85) including an AAA server FQDN from the first NF node (100).

22. The second NF node (200) according to claim 26, further being configured to perform the method according to any of claims 8 to 18.

## Patentansprüche

1. Verfahren zum Datenabruf eines UE (85) in einem 5GC, wobei das Verfahren von einem ersten NF-Knoten (100) durchgeführt wird, wobei das Verfahren Folgendes umfasst:
Erlangen (S106) einer Anforderung von Daten des UE (85) von einem zweiten NF-Knoten (200);
Abrufen (S108) der Daten des UE (85), einschließlich einer AAA-Server-FQDN; und
Bereitstellen (S110) der Daten des UE (85), einschließlich der AAA-Server-FQDN, an den zweiten NF-Knoten (200).

2. Verfahren nach Anspruch 1, wobei die AAA-Server-FQDN von einem UDR-Knoten (45) abgerufen wird und wobei das Verfahren ferner insbesondere Folgendes umfasst:
Erlangen (S102) einer ersten Aktualisierungsanforderung von einem NEF-Knoten (20), wobei die Aktualisierungsanforderung die AAA-Server-FQDN umfasst; und
Bereitstellen (S104) einer zweiten Aktualisierungsanforderung an den UDR-Knoten (45) mit der AAA-Server-FQDN.

3. Verfahren nach einem der Ansprüche 1 bis 2, wobei das Verfahren als Teil einer PDU-Sitzungsaufbauprozedur für das UE (85) durchgeführt wird.

4. Verfahren nach einem der Ansprüche 1 bis 3, wobei die Anforderung von Daten eine Anforderung zum Abruf von Sitzungsverwaltungsabonnementdaten für das UE (85) ist.

5. Verfahren nach einem der Ansprüche 1 bis 4, wobei die Daten des UE (85) entweder in einem DnnConfiguration-Objekt oder in einem 5gVnGroupData-Objekt bereitgestellt werden.

6. Verfahren nach einem der Ansprüche 1 bis 5, wobei der erste NF-Knoten (200) ein UDM-Knoten ist und wobei der zweite NF-Knoten (200) ein SMF-Knoten ist.

7. Verfahren zum Datenabruf eines UE (85) in einem 5GC, wobei das Verfahren von einem zweiten NF-Knoten (200) durchgeführt wird, wobei das Verfahren Folgendes umfasst:
Bereitstellen (S202) einer Anforderung von Daten des UE (85) an einen ersten NF-Knoten (100); und
Erlangen (S204) der Daten des UE (85), einschließlich einer AAA-Server-FQDN, von dem ersten NF-Knoten (100).

8. Verfahren nach Anspruch 7, ferner umfassend:
Authentifizieren der Daten des UE mit einem AAA-Server, wobei der AAA-Server auf Grundlage der AAA-Server-FQDN bestimmt wird.

9. Verfahren nach Anspruch 8, wobei das Bestimmen des AAA-Servers Abrufen (S206) eines Satzes von AAA-Server-IP-Adressen von einem DNS-Server durch Bereitstellen der AAA-Server-FQDN an den DNS-Server umfasst.

10. Verfahren nach einem der Ansprüche 7 bis 9, wobei das Verfahren ferner Folgendes umfasst:
Speichern (S208) einer Zuordnung zwischen der AAA-Server-FQDN und jeder IP-Adresse in dem Satz von AAA-Server-IP-Adressen.

11. Verfahren nach einem der Ansprüche 9-10, wobei das Verfahren ferner Folgendes umfasst:
Bereitstellen (S210) einer Authentifizierungsanforderung für das UE (85) an den AAA-Server an einer der IP-Adresse in dem Satz von AAA-Server-IP-Adressen.

12. Verfahren nach einem der Ansprüche 7 bis 11, wobei die Authentifizierungsanforderung zur sekundären Authentifizierung und Autorisierung für das UE (85) dient.

13. Verfahren nach Anspruch 12, wobei, wenn der AAA-Server nicht an der einen der IP-Adresse in dem Satz von AAA-Server-IP-Adressen erreicht werden kann, die Anforderung an eine andere der IP-Adresse in dem Satz von AAA-Server-IP-Adressen bereitgestellt wird.

14. Verfahren nach Anspruch 12 oder 13, wobei das Bereitstellen der Anforderung von Daten durch einen vorherigen fehlgeschlagenen Versuch, den AAA-Server zu kontaktieren, ausgelöst wird.

15. Verfahren nach einem der Ansprüche 7 bis 14, wobei das Verfahren als Teil einer PDU-Sitzungsaufbauprozedur für das UE (85) durchgeführt wird.

16. Verfahren nach einem der Ansprüche 7 bis 15, wobei die Anforderung von Daten eine Anforderung zum Abruf von Sitzungsverwaltungsabonnementdaten für das UE (85) ist.

17. Verfahren nach einem der Ansprüche 7 bis 16, wobei die Daten des UE (85) entweder in einem DnnConfiguration-Objekt oder in einem 5gVnGroupData-Objekt erlangt werden.

18. Verfahren nach einem der Ansprüche 7 bis 17, wobei der erste NF-Knoten (200) ein UDM-Knoten ist und wobei der zweite NF-Knoten (200) ein SMF-Knoten ist.

19. Erster NF-Knoten (100) zum Datenabruf eines UE (85) in einem 5GC, wobei der erste NF-Knoten (100) eine Verarbeitungsschaltung (110) umfasst, wobei die Verarbeitungsschaltung dazu konfiguriert ist, den ersten NF-Knoten (100) zu Folgendem zu veranlassen:
Erlangen einer Anforderung von Daten des UE (85) von einem zweiten NF-Knoten (200);
Abrufen der Daten des UE (85), einschließlich einer AAA-Server-FQDN; und
Bereitstellen der Daten des UE (85), einschließlich der AAA-Server-FQDN, an den zweiten NF-Knoten (200).

20. Erster NF-Knoten (100) nach Anspruch 19, der ferner dazu konfiguriert ist, das Verfahren nach einem der Ansprüche 2 bis 6 durchzuführen.

21. Zweiter NF-Knoten (200) zum Datenabruf eines UE (85) in einem 5GC, wobei der zweite NF-Knoten (200) eine Verarbeitungsschaltung (210) umfasst, wobei die Verarbeitungsschaltung dazu konfiguriert ist, den zweiten NF-Knoten (200) zu Folgendem zu veranlassen:
Bereitstellen einer Anforderung von Daten des UE (85) an einen ersten NF-Knoten (100); und
Erlangen der Daten des UE (85), einschließlich einer AAA-Server-FQDN, von dem ersten NF-Knoten (100).

22. Zweiter NF-Knoten (200) nach Anspruch 26, der ferner dazu konfiguriert ist, das Verfahren nach einem der Ansprüche 8 bis 18 durchzuführen.

## Revendications

1. Procédé pour la récupération de données d'un UE (85) dans un 5GC, le procédé étant réalisé par un premier nœud de NF (100), le procédé comprenant :
l'obtention (S106) d'une demande de données de l'UE (85) provenant d'un second nœud de NF (200) ;
la récupération (S108) des données de l'UE (85) incluant un FQDN de serveur AAA ; et
la fourniture (S110) des données de l'UE (85) incluant le FQDN de serveur AAA vers le second nœud de NF (200).

2. Procédé selon la revendication 1, dans lequel le FQDN de serveur AAA est récupéré à partir d'un nœud d'UDR (45), et particulièrement dans lequel le procédé comprend en outre :
l'obtention (S102) d'une première demande de mise à jour provenant d'un nœud de NEF (20), dans lequel la demande de mise à jour comprend le FQDN de serveur AAA ; et
la fourniture (S104) d'une seconde demande de mise à jour au nœud d'UDR (45) avec le FQDN de serveur AAA.

3. Procédé selon l'une quelconque des revendications 1 à 2, dans lequel le procédé est réalisé en tant que partie d'une procédure d'établissement de session de PDU pour l'UE (85).

4. Procédé selon l'une quelconque des revendications 1 à 3, dans lequel la demande de données est une demande de récupération de données d'abonnement de gestion de session pour l'UE (85).

5. Procédé selon l'une quelconque des revendications 1 à 4, dans lequel les données de l'UE (85) sont fournies soit dans un objet de DnnConfiguration, soit dans un objet de 5gVnGroupData.

6. Procédé selon l'une quelconque des revendications 1 à 5, dans lequel le premier nœud de NF (200) est un nœud d'UDM et dans lequel le second nœud de NF (200) est un nœud de SMF.

7. Procédé pour la récupération de données d'un UE (85) dans un 5GC, le procédé étant réalisé par un second nœud de NF (200), le procédé comprenant :
la fourniture (S202) d'une demande de données de l'UE (85) vers un premier nœud de NF (100) ; et
l'obtention (S204) des données de l'UE (85) incluant un FQDN de serveur AAA provenant du premier nœud de NF (100).

8. Procédé selon la revendication 7, comprenant en outre :
l'authentification des données de l'UE avec un serveur AAA, dans lequel le serveur AAA est déterminé sur la base du FQDN de serveur AAA.

9. Procédé selon la revendication 8, dans lequel la détermination du serveur AAA comprend la récupération (S206) d'un ensemble d'adresses IP de serveur AAA à partir d'un serveur de DNS en fournissant le FQDN de serveur AAA au serveur de DNS.

10. Procédé selon l'une quelconque des revendications 7 à 9, dans lequel le procédé comprend en outre :
le stockage (S208) d'un mappage entre le FQDN de serveur AAA et chaque adresse IP dans l'ensemble d'adresses IP de serveur AAA.

11. Procédé selon l'une quelconque des revendications 9 à 10, dans lequel le procédé comprend en outre :
la fourniture (S210) d'une demande d'authentification pour l'UE (85) au serveur AAA à l'une des adresse IP dans l'ensemble d'adresses IP de serveur AAA.

12. Procédé selon l'une quelconque des revendications 7 à 11, dans lequel la demande d'authentification est pour une authentification et une autorisation secondaires pour l'UE (85).

13. Procédé selon la revendication 12, dans lequel, si le serveur AAA ne peut pas être atteint à ladite une des adresse IP dans l'ensemble d'adresses IP de serveur AAA, la demande est fournie à une autre des adresse IP dans l'ensemble d'adresses IP de serveur AAA.

14. Procédé selon la revendication 12 ou 13, dans lequel la fourniture de la demande de données est déclenchée par une tentative infructueuse précédente de contacter le serveur AAA.

15. Procédé selon l'une quelconque des revendications 7 à 14, dans lequel le procédé est réalisé en tant que partie d'une procédure d'établissement de session de PDU pour l'UE (85).

16. Procédé selon l'une quelconque des revendications 7 à 15, dans lequel la demande de données est une demande de récupération de données d'abonnement de gestion de session pour l'UE (85).

17. Procédé selon l'une quelconque des revendications 7 à 16, dans lequel les données de l'UE (85) sont obtenues soit dans un objet de DnnConfiguration, soit dans un objet de 5gVnGroupData.

18. Procédé selon l'une quelconque des revendications 7 à 17, dans lequel le premier nœud de NF (200) est un nœud d'UDM et dans lequel le second nœud de NF (200) est un nœud de SMF.

19. Premier nœud de NF (100) pour la récupération de données d'un UE (85) dans un 5GC, le premier nœud de NF (100) comprenant une circuiterie de traitement (110), la circuiterie de traitement étant configurée pour amener le premier nœud de NF (100) à :
obtenir une demande de données de l'UE (85) provenant d'un second nœud de NF (200) ;
récupérer les données de l'UE (85) incluant un FQDN de serveur AAA ; et
fournir les données de l'UE (85) incluant le FQDN de serveur AAA vers le second nœud de NF (200).

20. Premier nœud de NF (100) selon la revendication 19, étant en outre configuré pour réaliser le procédé selon l'une quelconque des revendications 2 à 6.

21. Second nœud de NF (200) pour la récupération de données d'un UE (85) dans un 5GC, le second nœud de NF (200) comprenant une circuiterie de traitement (210), la circuiterie de traitement étant configurée pour amener le second nœud de NF (200) à :
fournir une demande de données de l'UE (85) vers un premier nœud de NF (100) ; et
obtenir les données de l'UE (85) incluant un FQDN de serveur AAA provenant du premier nœud de NF (100).

22. Second nœud de NF (200) selon la revendication 26, étant en outre configuré pour réaliser le procédé selon l'une quelconque des revendications 8 à 18.
